# EUROPEAN PATENT APPLICATION

(11) **EP 3 932 590 A1**
(43) Date of publication of application: **05.01.2022**
(21) Application number: 20183060.1
(22) Date of filing: 30.06.2020
(51) Int. Cl.: B22F 3/105, B22F 3/11, B33Y 10/00, B33Y 50/02, B33Y 80/00

(54) **SCAN STRATEGY FOR ADDITIVE MANUFACTURING A STRUCTURE WITH GRADED COURSE**

(71) Applicant: Siemens Aktiengesellschaft, 80333 München (DE)
(72) Inventor: The designation of the inventor has not yet been filed

(57) **Abstract**

A scan strategy for or method of additive manufacturing of a thin structure (10) out of a powder bed is presented, wherein the structure is formed by selectively scanning an energy beam (21), like a laser or electron beam, such that the structure is formed with a continuously graded bead width (w0, w1..) in a direction across the powder bed (P). Furthermore, an according computer program or computer program product (CPP) is presented. In addition, a lattice component (10) comprising a plurality of crossed web structures (w) additively manufactured of beads according to said method is presented, wherein the web structures (w) are arranged such that a bead width (w0, w1..) of each of the webs in one row of the lattice (10) is continuously graded along a common direction, such that lattice interspaces can be graded, e.g. along a diagonal of the lattice.

## Description

The present invention relates to a method or scan strategy for additive manufacturing a thin structure, preferably a wall structure with a width below 5 mm, out of a powder bed. Furthermore, a corresponding computer program or computer program product is provided. Still further, a lattice structure, comprising a plurality of crossed or intersecting webs which are manufactured by the given method, is provided.

Preferably, the mentioned structure or lattice relates to or is part of a high-performance component, such as a component applied in power generation, aerospace or automotive sector. The component may as well be a component of a turbo machine, e.g. applied in the flow path hardware of a gas turbine. The component is, thus, preferably made of a nickel- or cobalt-based superalloy, particularly a precipitation hardened alloy.

Additive manufacturing techniques comprise e.g. powder-bed-fusion (PBF) methods, such as selective laser melting (SLM) or selective laser sintering (SLS) or electron beam melting (EBM).

A method of selective laser melting is described in EP 3 022 008 B1, for example.

Additive manufacturing, particularly PBF has proven to be promising in the fabrication of prototypes or complex components, such as components with a mazelike or convoluted structure or functionally cooled components. Further, additive manufacturing stands out for its short chain of process steps which in turn enables material economization and a particularly low lead time.

Apparatuses or setups for PBF methods usually comprise a manufacturing or build platform on which the component is built layer-by-layer after the feeding of a layer of base material which may then be melted, e.g. by an energy beam, such as a laser, and subsequently solidified. The layer width is determined by a recoater that moves, e.g. automatically, over the powder bed and removes excess material from a manufacturing plane or build space. Typical layer widths amount to between 20 µm and 40 µm. During the manufacture, said energy beam scans over the surface and melts the powder on selected areas which may be predetermined by a CAD-file according to the geometry of the component to be manufactured.

Said scanning or irradiation is preferably carried out in a computer implemented way or via computer aided means, such as computer aided manufacturing (CAM) instructions, which may be present in the form of a dataset. Said dataset or CAM-file may be or refer to a computer program or computer program product.

Further additive manufacturing approaches relate to "Directed Energy Deposition (DED)", such as laser cladding, electron beam or plasma welding, metal inkjet molding (MIM), so-called sheet lamination methods, or thermal spraying (VPS, LPPS) methods, cold spraying (GDCS).

Lattice structures of complex components are often composed of very thin struts or walls which pose the margin at the lower end of what can be achieved via PBF. Thin struts or webs are usually formed or generated by using only a single scan vector, track or path during the additive buildup.

The resulting melt pool and therewith the weld bead geometry mainly depends on the choice of irradiation parameters, such as laser power and scan speed. These parameters are usually constant over the length of a vector. Graded lattice structures, which require the single struts or walls to grow gradually or in a continuous manner, can currently not be generated. Nevertheless, such structures are highly desired to design cooling geometries, such as of components applied in the hot gas path of stationary gas turbines or corresponding counterparts for aerospace applications.

There is a particular demand to further expand design freedom at the lower dimensional end of "additively-enabled" structures, as such improved design manifests in an improved performance. Just an example of such an improved performance is the reduction of crack emergence and propagation when thin structures can be established smoother or with less edges, steps or manufacturing artefacts.

Furthermore, e.g. perfusion or flowability of fluid through any mesh-like or porous component can be tailored and optimised to highest performance. This can e.g. be done anisotropically, such that fluid (cooling fluid) flow through a design might vary depending on the direction by which it is flown through.

In order to obtain a gradual or continuous course of strut widths or wall thicknesses, the number of vectors of a scanning pattern can be increased if a thicker wall is required. However, this will not result in a continuous wall thickness gradient but segments with steps of different thicknesses, which might not always meet the requirements of the desired application.

It is an object of the present invention to provide means which help to overcome the mentioned challenges, particularly to provide an approach for presenting a continuously graded course of thin, additively manufactured, structures.

The mentioned object is achieved by the subject-matters of the independent claims. Advantageous embodiments are subject-matter of the dependent claims.

An aspect of the present invention relates to a method or scan strategy for additive manufacturing a thin structure out of a powder bed by selectively scanning an energy beam, like a laser or electron beam, such that the structure is formed with a varying or continuously graded or increased (weld) bead width in a direction across the powder bed. The mentioned bead width may as well relate to a wall thickness, being formed by a single bead.

It is apparent that the dimension of a bead width is closely correlated to that one of the melt pool which solidifies into the mentioned bead width during the process. Consequently, the terms "bead width" and "melt pool" may be used synonymously herein. Likewise, it is apparent that the bead width - which establishes in the PBF process - depends on the laser focus and an input and density of heat applied by the energy beam onto the powder bed. Said input can, of course, be controlled via the parameters of the laser power or laser power density and the scanning speed. However, such parameters can be chosen or varied in certain ranges in order to allow for a reasonable structural result.

In a preferred embodiment, the energy beam is a laser.

In another embodiment, the energy beam is an electron beam.

In an embodiment the structure is or is part of a wall or a web as part of a lattice or lattice-like structure.

In an embodiment, said lattice is applied in a component of a hot gas path of a gas turbine during its intended operation, such as a burner component or a part applied in the turbine's combustion chamber.

In an embodiment, the bead width is varied in a range between 0 and 5 mm, particularly between 0 and 2 mm. These ranges particularly amount to the lower end of bead width which is most difficult to vary or grade continuously during the additive process. Greater bead widths may, on the other hand, be varied easier e.g. in that just the number of parallel vectors is increased.

In an embodiment the energy beam, such as the laser beam, is scanned in a pulsed mode to provide the structure with the lowest bead width, of e.g. between 50 µm and 80 µm. In this operational mode, said bead widths may advantageously be achieved in a reliable way.

In an embodiment, said scanning is followed - in the given direction across the powder bed - by a continuous wave (cw-mode) scanning mode, preferably in a single path. The use of continuous scanning paths in powder bed fusion methods is known to be more time efficient and less costly, as the given scanning vectors can more rapidly be scanned through; however at the expense of a less balanced energy input and, possibly an adverse solidification result.

In an embodiment, an upper energy limit of the pulsed mode scanning path or track is chosen equal to a lower energy limit of the continuous wave scanning path. By this embodiment, a transition between the given scanning mode is chosen such that a structural result of the given solidified structure or bead is realised with the smoothest course.

In an embodiment an energy input is (gradually) increased for the continuous wave scanning until an upper energy limit is reached. This measure further allows to continuously extend the bead width in a single (continuous wave) scanning path.

In an embodiment the single path (cw) scanning is followed by a double path (vector) scanning for further increasing the width of the bead.

In an embodiment a lower width limit (cf. detailed description of the inventive embodiments below) of the double path scanning is chosen equal to an upper width value or limit of the single path (cw) scanning. This embodiment has similar merits as described above by way of the single path scanning, i.e. that a transition between the given scanning mode can advantageously be chosen such that structural result of the given solidified structure or bead is optimized.

In an embodiment, after the previously described embodiment, an energy input of the paths of the double path scanning is set to a lower limit, respectively. This embodiment advantageously allows tailor the bead widths by adapting the energy input in a later step.

In an embodiment, a distance between the paths of the double path scanning is gradually increased until a minimum overlap of said paths is reached. Advantageously, this embodiment further allows to exploit the whole parameter range for continuously grading the resulting bead width.

In an embodiment, an energy input of the paths of the double path scanning is (gradually) increased. This is preferably carried out after the measures of the previously described embodiment.

In an embodiment, a distance between the paths of the double path scanning is (again) gradually increased until a minimum overlap of the paths is reached, when an upper energy limit is reached or attained for said paths. This is preferably carried out after the measures of the previously described embodiment.

It is preferred in an embodiment of the present invention that the latter three embodiments are realised altogether and in the outlined chronology.

In an embodiment, the double path (cw) scanning is followed by a scan with still a further (triple) scanning path for (still further) increasing the width of the bead, wherein an energy input of all of the paths is set to a lower limit respectively, wherein a lower width limit of said paths is chosen equal to an upper width value of the previous (double) scanning, wherein a distance between the respective paths is gradually increased until a minimum overlap of said paths is reached, wherein an energy input of (all of) said paths is increased and wherein a distance between said paths is again gradually increased until a minimum overlap of said paths is reached, when an upper energy limit is reached for said paths.

Another aspect of the present invention relates to a lattice structure or mesh comprising a plurality of crossed or intersecting webs, struts or web structures additively manufactured of beads according to the method as described above, wherein the web structures are arranged such that a bead width of each of the webs in one row of the lattice is continuously graded along a common direction, like a main extension of the lattice, such that lattice interspaces are e.g. graded varied along a diagonal of the lattice.

A further aspect of the present invention relates to a computer program, computer program product and/or computer readable medium, comprising instructions which, when an according program is executed by a computer, data processing device or build processor, cause said means to carry out the method as described above.

A computer program product as referred to herein may relate to a computer program means constituting or comprising a storage medium like a memory card, a USB stick, a CD-ROM, a DVD or a file downloaded or downloadable from a server or network. Such product may be provided by a wireless communication network or via transfer of the corresponding information by the given computer program, computer program product or computer program means. A computer program product may include a non-transitory computer-readable storage medium storing applications, programs, program modules, scripts, source code, program code, object code, byte code, compiled code, interpreted code, machine code, executable instructions, and/or the like. Such non-transitory computer-readable storage media include all computer-readable media (including volatile and non-volatile media).

A further aspect of the present invention relates to an apparatus for additive manufacturing which is configured as a build processor for the additive manufacture of the structure, wherein the apparatus further comprises an interface with a manufacturing hardware.

Advantages and embodiments relating to the described method and/or the described computer program means may as well pertain or be valid with regard to the lattice structure and/or the component as described.

Further features, expediencies and advantageous embodiments become apparent from the following description of the exemplary embodiment in connection with the figures.
Figure 1 indicates in a schematic, principles of the powder bed based additive manufacture of the component.
Figure 2 indicates in a simplified schematic top view a scanning strategy comprising a plurality of scanning paths.
Figure 3 indicates particulars of an energy input of a single scanned energy beam in a pulsed mode (left) and in a continuous wave mode (right).
Figure 4 indicates in a schematic, the course of a scan with increased bead width from left to right.
Figure 5 indicates - similar to Figure 3 - particulars of an energy input of a double path scan.
Figure 6 indicates - analogue to Figure 4 - a scan with increased bead width from left to right.
Figure 7 indicates the course of the scan with still increased bead width as compared to Figure 6.
Figure 8 indicates - similar to Figure 5 - further particulars of an energy input of the double path scan.
Figure 9 indicates the course of the scan with still increased bead width as compared to Figure 7.
Figure 10 indicates - similar to Figure 8 - particulars of an energy input of a triple path scan.
Figure 11 indicates the course of the scan with still increased bead width as compared to Figure 9.
Figure 12 indicates the course of the scan with still increased bead width as compared to Figure 11.
Figure 13 summarises the described measures of increasing the bead width of the weld bead in a continuous way.
Figure 14 indicates in a schematic view, a lattice structure comprising a plurality of crossed web like structures, wherein each of the webs is manufactured in the described way with a continuously increased weld bead width.
Figure 15 outlines a map symbology as used in the figures as described herein.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

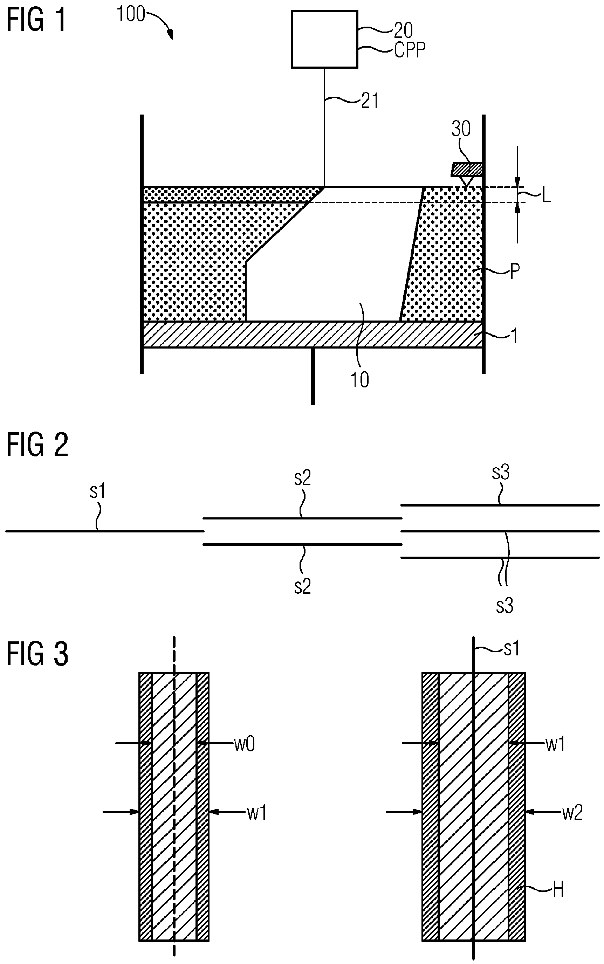

Figure 1 shows an additive manufacturing device 100. Said device 100 may be a conventional device for manufacturing any type of components by powder-bed-fusion (cf. PBF). Such techniques employ a bed of a powder or base material P which is selectively and layerwise exposed to or irradiated by an energy beam 21, such as a laser or an electron beam of an irradiation apparatus or energy beam source 20. Accordingly, the given PBF method may relate to selective laser sintering, selective laser melting or electron beam melting. Said processes have in common that the component (cf. reference numeral 10) is established or build up on top of a build platform 1. In other words, the component 10 is fused or welded onto said platform 1 and consecutively established by selectively solidifying the base material according to its predefined geometry which may be present in form of a CAD-file. After the irradiation or fusing of each layer (cf. reference numeral L), the build platform 1 is usually lowered according to the layer thickness and a new base material layer is deposited on a manufacturing plane via a recoater 30.

The irradiation apparatus 20 is connected to or may be implemented via a computer program or processor, such as a build processor, as indicated by numeral CPP. As will be described further below, the presented method of additive manufacturing or as the case may be the resulting scan strategy may - once an additive manufacturing device 100 is controlled according to said scanning strategy - be fully implemented by generic data processing means.

Figure 2 indicates a scanning strategy for the additive manufacture of any component in a simplified schematic. On the left, only a single path or scanning track is shown. Further to the right, said path is followed by a double path scan.

Still further to the right, the double path scan is replaced by a triple path scan. In conclusion, when increasing the number of parts for a given scanning strategy, such as along a powder bed direction, also a wall thickness of the bead width of the corresponding (solidified) structure increases stepwise. When such steps evolve, such as in a prior art manufacture, this leads to the generation of crack centers which might be adverse for the durability of any component and might as well fail meet the requirements of the given application.

The method according to the present invention - as will be described in the following in detail - intends to overcome said problems by providing means to continuously grade such a course of a weld bead or scanning track. Said method is a method of additive manufacturing a thin structure 10 out of a powder bed P by selectively scanning an energy beam 21, like, preferably, a laser or electron beam, such that the structure 10 is formed with a continuously graded bead width in a direction across the powder bed P.

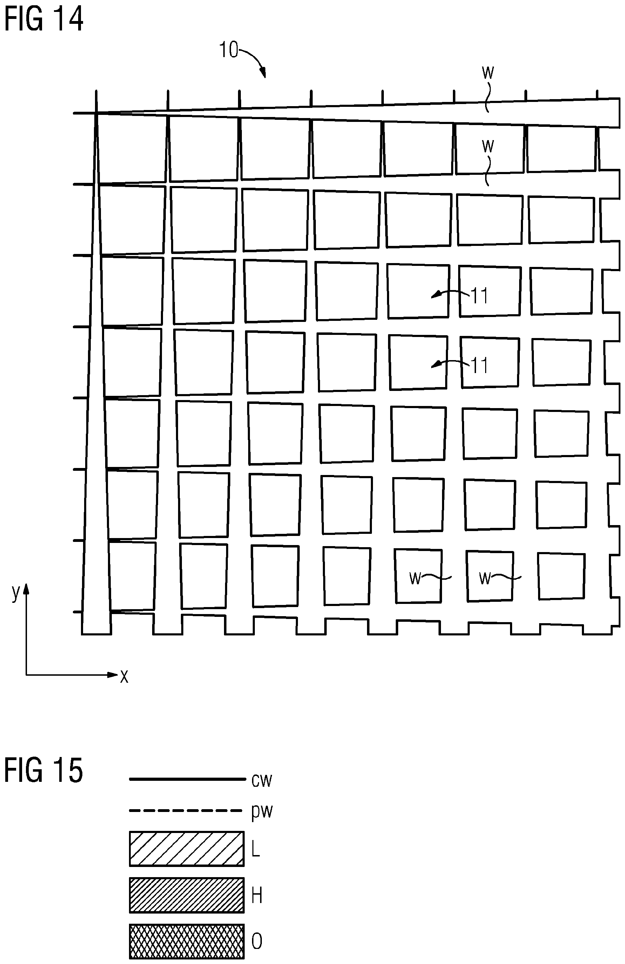

Preferably, the structure 10 is a wall or a web w as part of a lattice, as will be described in more detail in Figure 14 below.

For a reliable and reproducible manufacture of thin and filigree structures out of a powder bed, an accurate control of a plurality of irradiation parameters is necessary. E.g. decreasing an energy input leads to the generation of smaller melt pools as compared to a reference process. On the other hand, increasing a scan speed will probably lead to smaller melt pools as well, as an energy density put in a powder bed (per unit time and area) is decreased.

For a stable process and a reliable structural result, there is a lower limit for the energy input. Below that threshold, no stable or reliable manufacture is possible anymore, as the provided energy is insufficient to allow for continuous melt pools. The consequence is discontinuous and insufficient melting of the powder.

At the same time, there, however, exists an upper energy limit, above which a powdery material is not melted any more in a reliable way, as it is mostly evaporated, thereby rendering a stable additive process also impossible.

Consequently, there is only a small "process window" for a given material as well as energy source, within which a melt pool size can be influenced by the relevant irradiation parameters in a controlled way. As the energy input has an upper and lower limit, for a single vector, this leads to maximum and minimum melt pools and, thus, bead widths which in turn approximately equal the resulting thickness of a structure.

The following parameters can e.g. be adjusted to influence the wall thickness or - as the case maybe - the weld bead widths: energy input, irradiation mode, number of scan vectors (paths), vector/hatch distance (which determines a possible melt pool overlap) and vector orientation angle, to name only few.

The thickness or width values will be described as wi, i.e. by way of the reference numerals w0, w1, w2 etc.. A detailed map of the symbols of the figures as described herein is given in Figure 15. A dashed contour shall e.g. denote a pulsed irradiation mode while a full line shall indicate a cw scanning path.

Figure 3 shows on the left such a pulsed mode (pw) irradiation, wherein w0 denotes the (lowest) bead width. As compared to that, an increased bead width w1 may be achieved by an increased energy parameter of the pulsed beam. The energy beam 21 (cf. Figure 1) is scanned in a pulsed mode pw to provide the structure 10 with the lowest bead width w0, of e.g. between 50 µm and 80 µm.

On the right in Figure 3, an analogue sketch of the continuous (cw) irradiation mode is shown. As indicated, it is evident that widths w1 and w2 of such cw scanning paths are usually larger than the ones obtainable via a pulsed irradiation of the energy beam.

In both cases, only a single scanning path is shown in Figure 3, respectively.

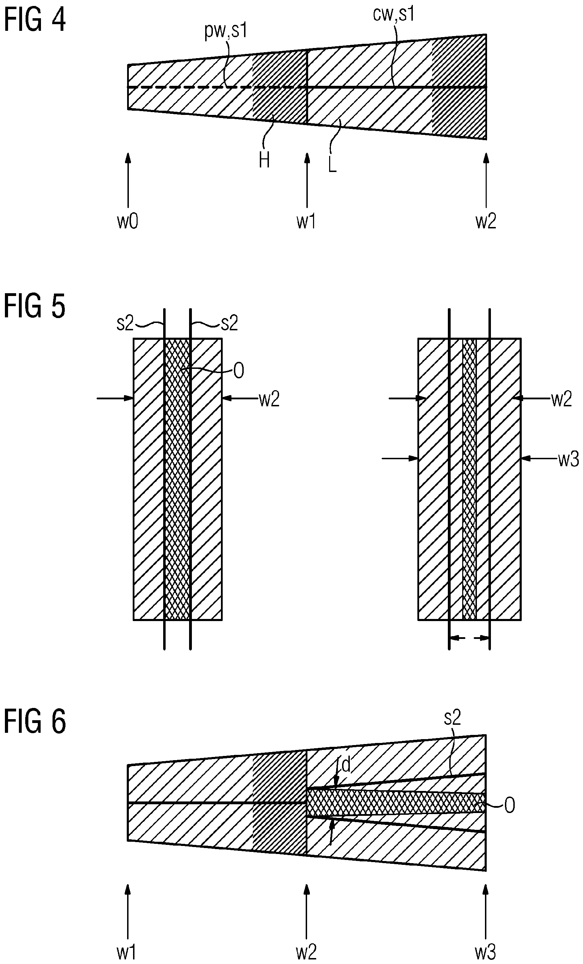

Figure 4 indicates accordingly a scan strategy of the scanning path according to an embodiment of the present invention, wherein an initial (pulsed) irradiation scan is followed by a continuous cw irradiation scan.

In a pulsed irradiation mode, by the way, structures or widths can be achieved which are even thinner than the melt pool that can be produced with the minimum allowable energy in continuous wave mode. Particularly, the melt pools produced with every pulse can be smaller than those resulting from a cw-mode. If the remaining irradiation parameters are adjusted properly, the melt pools can even be smaller (narrower) than the laser beam diameter. For instance, a 60 µm wide melt pool may in such a way be produced by an 80 µm laser focus diameter.

Generally, in a pulsed wave irradiation mode, the energy input can be controlled more easily than in a continuous wave mode.

According to the embodiment of the method of Figure 4, the width of the given bead s1 is increased from w0 to w1 in that the energy of the beam is increased as well. Further, an upper energy limit H of the pulsed mode scanning is chosen equal or approximately equal to a lower energy limit L of the continuous wave cw scanning.

Furthermore, an energy input is increased for the continuous wave cw scanning until an upper energy limit H (of the continuous wave scanning) is reached.

To further increase the wall thickness, further measures need to be applied according to the present invention, i.e. for example a second vector is provided to further increase in energy input, as further increase of energy of a single irradiation track would result in material evaporation as described above (cf. upper process window).

Figure 5 introduces - analogue to Figure 3 - scanning or irradiation properties of a double path scanning (cf. vectors s2) as a measure to increase the thickness of a given scanning pattern (cf. scanning path s1 as shown in Figure 4) in a continuously graded manner. In excess to Figure 3, an overlap O of both scan paths s2 is particularly shown. Such an overlap is particularly necessary to maintain a continuous energy input and, thus, melt pool to obtain a continuous structure.

On the left in Figure 5, a maximum overlap O is shown, while the right side shows a minimum overlap O. At a minimum overlap O, the double path scanning leads - at a given energy value - to a larger bead width (not explicitly indicated in Figure 5).

In Figure 6, it is particularly shown that the single path continuous wave scanning s1 is followed by a double path continuous wave scanning s2 (as shown in Figure 5) for increasing the width from w1 to w2 as shown on the right. Furthermore, onwards from the width w2 further to the right, a distance d between the paths of the double path scanning s2 is gradually increased until a width w3 is reached at a minimum overlap O of said paths.

It is shown that a lower width limit of the double path scanning is chosen equal (cf. w2) to an upper width value of the single path scanning, and wherein an energy input of the paths of the double path scanning is set to a lower limit, respectively. In other words, the lower thickness value of the double vector needs to be equal to the maximum thickness value of the single cw track. The distance between the two vectors or paths can, then, be gradually increased until reaching the minimum overlap O, which may be required to establish a structure of poor or zero defect density.

When increasing the number of vectors in general, the energy level is set to the minimum, in order to secure a handle or degree of freedom to further (continuously) increase any bead's width.

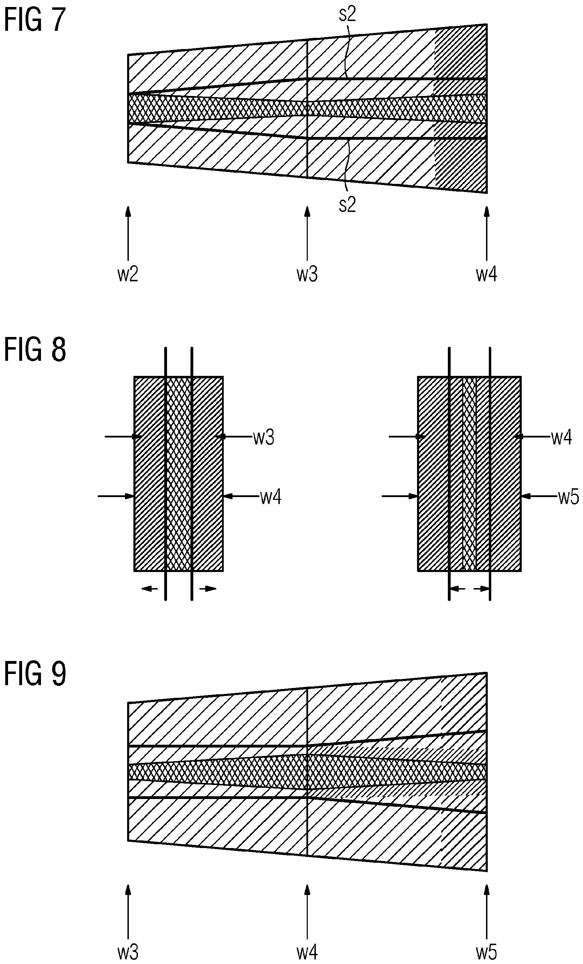

Figure 7 indicates a schematic in which a further course of the depicted scan pattern is extrapolated towards a bead width w4 in that an energy input of the paths of the double path scanning s2 is increased.

Figure 8 shows again qualitatively and analogue to Figure 5 the comparison of a maximum overlap double scan (left) and a minimum overlap double scan on the right, whereby a bead widening can be reached from w3 to w5.

Figure 9 shows a schematic which rolls forward the scanning path(s) from w4 to w5, wherein w5 is - according to the intention of the present invention - greater than w4. During the rightmost course, a distance d between the paths of the double path scanning s2 is again gradually increased until a minimum overlap O of the paths is reached, when an upper energy limit H is reached for said paths.

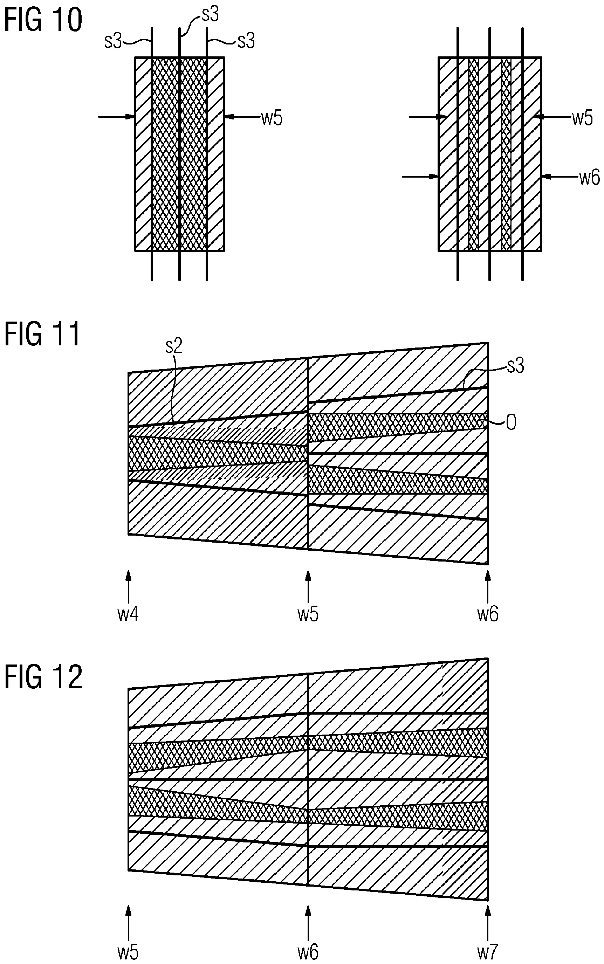

Figure 10 - describes similar to Figure 5 - details of a further, triple, path scanning (cf. vectors s3) as a measure to further increase the thickness of a given scanning pattern, in fact in a continuously graded manner.

On the left in Figure 10, again, a maximum overlap O is shown, while the right side shows a minimum overlap O. At a minimum overlap O, the triple path scanning leads - at a given energy value to a still greater bead width. The greatest bead width to be obtained at a minimum overlap of the given parts s3 in this configuration is indicated by w6.

In Figure 11, it is further shown (cf. Figure 6 for the previously described path course) that the double path continuous wave scanning s2 is followed by said further (triple) path s3 continuous wave scanning for increasing the width (from w4 to w6). Furthermore, onwards from the width w5 further to the right, a distance d between the paths of this scanning pattern is gradually increased until a width w6 is reached at a minimum overlap O.

Like already previously described by way of the initial scanning course, is shown that a lower width limit of the triple path scanning is chosen equal (cf. w5) to an upper width value of the double path scanning, and wherein an energy input of the paths of the triple path scanning is set to a lower limit, respectively. In other words, the lower thickness value of the triple vector needs to be equal to the max thickness value of the double cw track. The distance between the two vectors can then be gradually increased until reaching the minimum overlap O.

Figure 12 indicates a schematic in which a further course of the depicted scan pattern is extrapolated towards a bead width w7 in that an energy input of the paths of the triple path scanning s3 is further increased. During the rightmost course, a distance d between the paths of the triple path scanning s3 is again gradually increased until a minimum overlap O of the paths is reached, when an upper energy limit H is reached for said paths.

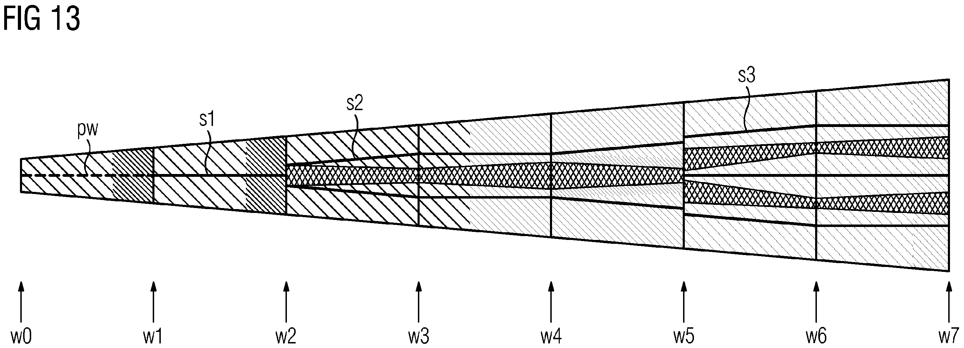

Figure 13 summarises the described measures of increasing the bead width of the weld bead in a continuous way. Particularly, the whole course of the scanning pattern, from w0 to w7, is illustrated. The depicted pattern extends from starting with the pulsed irradiation mode at a lower energy level and with beam width w0 towards a beam width w7 which can be achieved with a triple path irradiation s3 and wherein all measures of achieving a continuous melt pool are exploited, i.e. the single distances between the paths are maximised as well as the respective energy levels H (cf. upper energy level) .

Although this is not explicitly indicated in the figures, it is apparent that the described measures of obtaining a continuously graded bead width or wall thickness for additively manufactured components can be extended to an even greater number of (parallel) beam patterns. Alternatively, the described measures can be combined e.g. with a conventional hatching or scanning strategy, inter alia comprising hatching scans and contour scans.

Most preferably, the described measures of widening the bead wall thickness bottom-up are used in a beam width range of below 5 mm, i.e. e.g. from 0 to 5 mm, particularly between 0 and 2 mm.

Figure 14 indicates a lattice 10 structure comprising a plurality of crossed web structures w additively manufactured of beads, wherein the web structures w are arranged such that a bead width of each of the webs in one row of the lattice is continuously graded along a common direction x,y, such that lattice interspaces 11 can be continuously graded, e.g. along a diagonal of the lattice. Particularly, it is shown in Figure 14 that the interspaces are getting smaller the further the lattice extends from the upper left side to the bottom right side. This is a direct consequence of the regular arrangement of continuously graded weld beads of the shown lattice webs. By tailoring the interspaces, of course also a flowability or permeability of the lattice can be customised to the desired application. A skilled person of course appreciates that - without loss of generality - any other desired arrangement of graded wall or bead courses can be chosen, such as e.g. an irregular one.

Said lattice may particularly relate to or be a part of a component of a high-performance material, such as a material of great strength and/or thermal resistivity. Particularly, said part may constitute a part of a steam or, preferably, a gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component, such as a part applied in the aerospace or automotive industry.

## Claims

1. Method of additive manufacturing a thin structure (10, w) out of a powder bed (P) by selectively scanning an energy beam (21), like a laser or electron beam, such that the structure (10, w) is formed with a continuously graded bead width (w0, w1..) in a direction across the powder bed (P).

2. Method according to claim 1, wherein the structure (10) is a wall (w) or a web (w) as part of a lattice.

3. Method according to claim 1 or 2, wherein the bead width (w0, w1..) is varied in a range between 0 and 5 mm, particularly between 0 and 2 mm.

4. Method according to one of the previous claims, wherein the energy beam (21) is scanned in a pulsed mode (pw) to provide the structure (10) with the lowest bead width (w0), of e.g. between 50 µm and 80 µm.

5. Method according to claim 4, wherein the pulsed mode (pw) scanning is followed by a continuous wave scanning (cw mode) in a single path.

6. Method according to claim 5, wherein an upper energy limit (H) of the pulsed mode scanning is chosen equal to a lower energy limit (L) of the continuous wave (cw) scanning.

7. Method according to claim 6, wherein an energy input is increased for the continuous wave (cw) scanning until an upper energy limit (H) is reached.

8. Method according to one of claims 5 to 7, wherein the single path continuous wave scanning (s1) is followed by a double path (s2) continuous wave scanning for increasing the width (w1, w2) of the bead (w).

9. Method according to claim 8, wherein a lower width limit of the double path scanning is chosen equal (w2) to an upper width value of the single path scanning, and wherein an energy input of the paths of the double path scanning is set to a lower limit, respectively.

10. Method according to claim 8 or 9, wherein a distance (d) between the paths of the double path scanning (s2) is gradually increased until a minimum overlap (O) of said paths is reached.

11. Method according to claim 10, wherein an energy input of the paths of the double path scanning (s2) is increased.

12. Method according to claim 11, wherein a distance (d) between the paths of the double path scanning (s2) is again gradually increased until a minimum overlap (O) of the paths is reached, when an upper energy limit (H) is reached for said paths.

13. Method according to one of claims 8 to 12, wherein the double path scanning (s2) is followed by a scanning with still a further scanning path (s3) for increasing the width (w5) of the bead (w), wherein an energy input of all of the paths (s3) is set to a lower limit, respectively, wherein a lower width limit of said paths (s3) is chosen equal (w5) to an upper width value of the previous scanning, wherein a distance (d) between the respective paths (s3) is gradually increased until a minimum overlap (O) of said paths (s3) is reached, wherein an energy input of said paths (s3) is increased, and wherein a distance (d) between said paths is again gradually increased until a minimum overlap (O) of the paths (s3) is reached, when an upper energy limit is reached for said paths (s3).

14. Lattice structure (10) comprising a plurality of crossed web structures (w) additively manufactured of beads according to the method of one of the previous claims, wherein the web structures (w) are arranged such that a bead width of each of the webs in one row of the lattice is continuously graded along a common direction (x,y), such that lattice interspaces (11) can be continuously graded, e.g. along a diagonal of the lattice.

15. A computer program product (CPP) comprising instructions which, when the program is executed by a computer, data processing device or build processor (20), cause said means to carry out the method of one of claims 1 to 13.
